# EUROPEAN PATENT APPLICATION

(11) **EP 1 420 188 A2**
(43) Date of publication of application: **19.05.2004**
(21) Application number: 03007233.4
(22) Date of filing: 01.04.2003
(51) Int. Cl.: F16F 15/12, F16H 57/02

(54) **Friction damper and gear transmission device using the same**

(30) Priority: 12.11.2002 JP 2002328273
(71) Applicant: Koyo Sealing Techno Co., Ltd., Itano-gun, Tokushima 771-1295 (JP); KOYO SEIKO CO., LTD., Osaka 542-0081 (JP)
(72) Inventor: Yano, Yoshihiro, c/o Koyo Sealing Techno Co., Ltd., Itano-gun, Tokushima 771-1295 (JP); Atsumi, Toshiyuki, Chuo-ku, Osaka 542-0081 (JP)
(74) Representative: TER MEER STEINMEISTER & PARTNER GbR

(57) **Abstract**

A friction damper, which is used for a gear transmission device including a shaft element (2), a gear (1) into which the shaft element (2) penetrates, and a rolling element (4) interposed between the shaft element (2) and the gear (1), the shaft element (2) and the gear (1) being provided to be relatively rotatable around the shaft (2) center, includes : a core (8) attached to the peripheral surface of a fixed member which is either the shaft element (2) or the gear (1); and an elastic member (9) integrally provided with the core (8). The elastic member (9) has a lip which slides in contact with the peripheral surface of a rotating member which is either the shaft element (2) or the gear (1), and a plurality of lubricating oil paths formed on the rotating member in a circumferential direction. The core (8) includes a cylindrical part (10) fitted onto the peripheral surface of the fixed member, and a disk part (11) provided on the edge portion of the cylindrical part (10) on the rolling element (4) side so as to extend in a radial direction. The surface of the core (8) is subjected to a hardening process.

## Description

### BACKGROUND OF THE INVENTION

The present invention relates to a friction damper for preventing the occurrence of rattle noise from a gear provided inside a gear transmission device such as a manual transmission in an automobile, and a gear transmission device using the same.

A transmission of an automobile is provided with a gear which is interlocked with a crankshaft of an engine for its rotation, and a gear shaft which rotatably supports the gear. When irregular vibration of the crankshaft of the engine is transmitted to the gear at the time of running of the automobile, the gear causes peculiar rattle noise.

In order to prevent the rattle noise, a friction damper for a gear transmission device (hereinafter, simply referred to as friction damper) for preventing the occurrence of the rattle noise by imparting appropriate friction is conventionally provided between the gear and the gear shaft which rotatably supports the gear (see Japanese Unexamined Utility Model Publication No. 63-187747, for example).

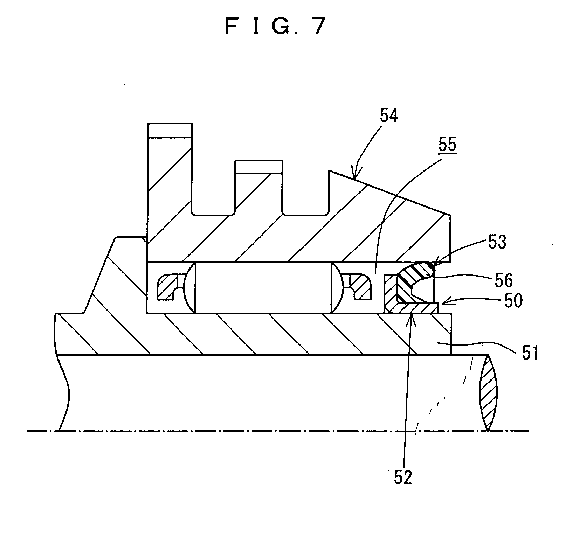

The configuration of a conventional friction damper 50 will be described with reference to FIG. 7. The friction damper 50 includes: an annular core 52 which has an L-shaped upper cross section and which is pressed in and fitted onto a shaft (sleeve) 51; and an annular elastic element 53 which is integrally provided on the outer peripheral surface of the core 52.

The elastic element 53 has a lip 56 which slides in contact with the entire peripheral surface of a shaft hole 55 of a gear 54. As the core 52, a cold-reduced carbon steel sheet: SPCC (JIS G3141) is pressed and used without being hardened. In the case where the unhardened core 52 is pressed in and fitted onto the shaft 51, when the surface hardness of the core 52 is lower than that of the shaft 51, the portion of the core 52, in which the shaft 51 is pressed, will be shaved, thereby generating metallic powder.

### SUMMARY OF THE INVENTION

A friction damper according to the present invention is used for a gear transmission device including a shaft element, a gear into which the shaft element penetrates, and a rolling element interposed between the shaft element and the gear, the shaft element and the gear being provided so as to be relatively rotatable around a shaft center. The friction damper includes: a core attached to the peripheral surface of a fixed member which is either the shaft element or the gear; and an elastic member integrally provided with the core. The elastic member has a lip sliding in contact with the peripheral surface of a rotating member which is either the shaft element or the gear, and a plurality of lubricating oil paths formed on the rotating member in a circumferential direction. The core includes a cylindrical part fitted onto the peripheral surface of the fixed member, and a disk part provided on the edge portion of the cylindrical part on the rolling element side so as to extend in a radial direction. The surface of the core is subjected to a hardening process.

The friction damper having the above-mentioned configuration is intended to generate predetermined friction between the shaft element and the gear by making the lip of the elastic member slide in contact with the peripheral surface of the rotating member.

As described above, the surface of the core is subjected to the hardening process. As a result, when the core is attached so as to press in the rotating member of the gear transmission device, it is possible to prevent the friction damper from damaging by the rotating member. In addition, since the inside of the core is unhardened while keeping the hardness of the base material, it is possible to easily fit the core onto the peripheral surface of the fixed member without deforming the core by pressing force.

For example, when the gear transmission device is provided with a cage for holding a rolling element, even if the cage moves in the axial direction and hits the disk part, the cage can protect the disk part of the core from being damaged.

According to the friction damper of the present invention, the core is subjected to a gas nitrocarburizing treatment, thereby hardening the surface thereof. Therefore, it is possible to easily control the hardness and the surface depth having the hardness.

A gear transmission device according to the present invention includes: a shaft element; a gear into which the shaft element penetrates; a rolling element interposed so as to freely roll between the shaft element and the gear; and a friction damper which is disposed between the shaft element and the gear and is also disposed beside the rolling element in an axial direction to generate friction between the shaft element and the gear, the shaft element and the gear being provided so as to be relatively rotatable around a shaft center. The friction damper includes a core attached to the peripheral surface of a fixed member which is either the shaft element or the gear, and an elastic member integrally provided with the core. The elastic member has a lip sliding in contact with the peripheral surface of a rotating member which is either the shaft element or the gear, and a plurality of lubricating oil paths formed on the rotating member in a circumferential direction. The core includes a cylindrical part fitted onto the peripheral surface of the fixed member, and a disk part provided on the edge portion of the cylindrical part on the rolling element side so as to extend in a radial direction. The surface of the core is subjected to a hardening process. The surface hardness of the core is set equal to or slightly lower than the surface hardness of the peripheral surface of the rotating member.

As described above, the surface of the core of the friction damper is subjected to the hardening process. As a result, when the core is attached so as to press in the rotating member of the gear transmission device, thereby assembling the gear transmission device, it is possible to prevent the friction damper from damaging by the rotating member. In addition, since the inside of the core is unhardened while keeping the hardness of the base material, it is possible to easily fit the core onto the peripheral surface of the fixed member without deforming the core by pressing force.

For example, when the gear transmission device is provided with a cage for holding a rolling element, even if the cage moves in the axial direction and hits the disk part, the cage can protect the disk part of the core from being damaged.

### BRIEF DESCRIPTION OF THE DRAWINGS

FIG. 1 is an enlarged sectional view of the portion including a friction damper of a gear transmission device showing a first embodiment of the present invention;
FIG. 2 is a front view of the friction damper;
FIG. 3 is a sectional view of the friction damper taken along line A-A of FIG. 2;
FIG. 4 is an enlarged half sectional view of a core of the friction damper;
FIG. 5 is a front view of a friction damper showing a second embodiment of the present invention;
FIG. 6 is a sectional view of the friction damper taken along line B-B of FIG. 5; and
FIG. 7 is an enlarged sectional view of the portion including a friction damper of a conventional gear transmission device.

### DETAILED DESCRIPTION

Hereinafter, friction dampers and gear transmission devices according to embodiments of the present invention will be described with reference to the drawings. It is noted that each figure shows an example of a gear transmission device used for a manual transmission of an automobile.

### (First Embodiment)

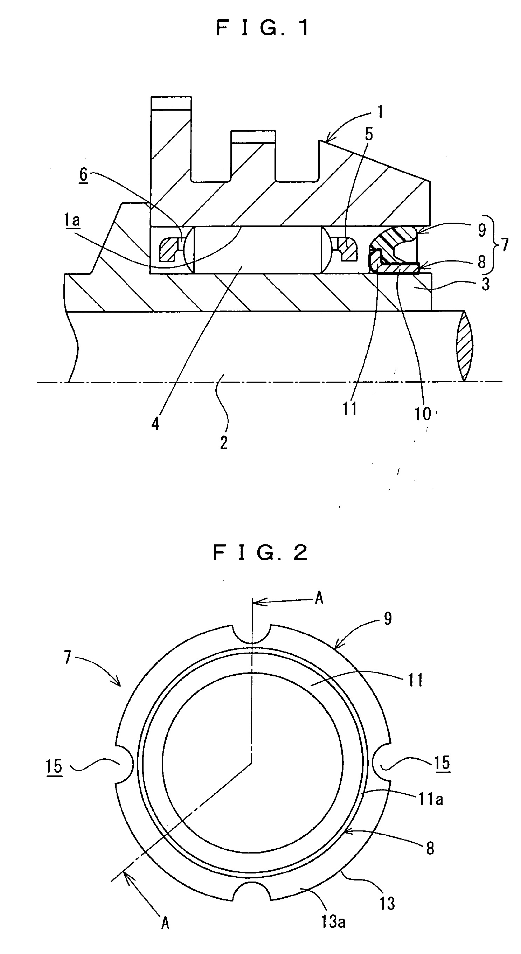

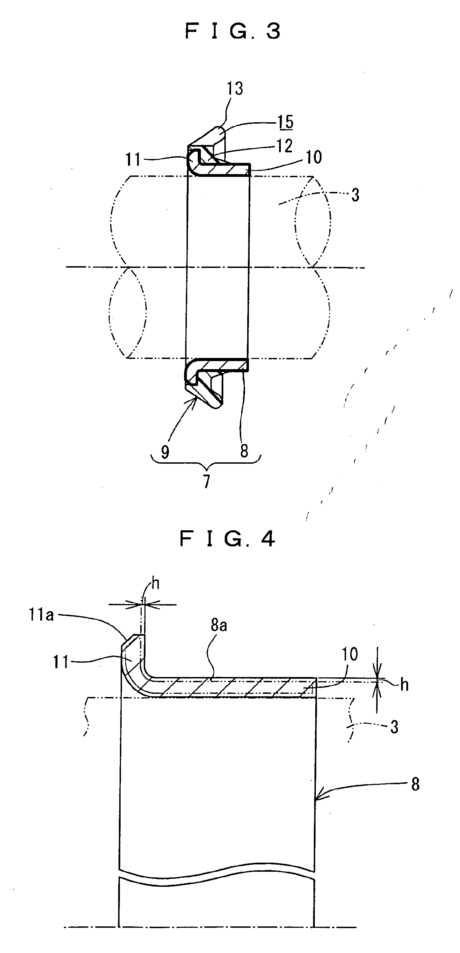

FIG. 1 is an enlarged sectional view of the portion including a friction damper of a gear transmission device. FIG. 2 is a front view of the friction damper. FIG. 3 is a sectional view taken along line A-A of FIG. 2. FIG. 4 is an enlarged half sectional view of a core of the friction damper.

With reference to these figures, a reference numeral 1 denotes a gear which is a rotating member, a reference numeral 2 denotes a gear shaft which forms a non-rotating member, and a reference numeral 3 denotes a sleeve which is outwardly fit onto the gear shaft 2. The gear shaft 2 and sleeve 3 form a shaft element which is a non-rotating member.

A reference numeral 4 denotes a needle roller which is a rolling element. The needle roller 4, which utilizes the peripheral surface of a shaft hole 1a of the gear 1 as an outer ring raceway surface and the outer peripheral surface of the sleeve 3 as an inner ring raceway surface, is provided so as to freely roll between the gear 1 and the sleeve 3. The plurality of needle rollers 4, each of which is held by a pocket 6 of a cage 5 having an annular shape, are disposed on the gear shaft 2 in a circumferential direction at equal intervals.

Since predetermined friction generates between the sleeve 3 and the gear 1, a friction damper 7 is provided for suppressing rattle noise of the gear due to the irregular vibration of a crankshaft of an engine at the time of running of an automobile or squeaking noise during idling.

The friction damper 7 is disposed between the outer peripheral surface of the sleeve 3 and the inner peripheral surface of the gear 1 (the peripheral surface of the shaft hole 1a), and is also disposed beside the needle roller 4 in the axial direction. The friction damper 7 is formed from an annular core 8 and an elastic member 9 made of vulcanized rubber.

The core 8 is formed by pressing a cold-reduced carbon steel sheet [SPCC (JIS G3141)] having a thickness of 0.6 mm as a base material. The core 8 is formed from a cylindrical part 10 which is pressed in the peripheral surface of the sleeve 3 from the axial direction, and a disk part 11. The disk part 11 integrally formed with the cylindrical part 10 so as to outwardly bend in the radial direction on the cage 5 (needle roller 4) side, thereby facing the needle roller 4 in the axial direction. A chamfer 11a is formed in the outer peripheral corner portion of the needle roller 4 of the disk part 11.

The entire surface of the core 8 is hardened by a gas nitrocarburizing treatment down to a predetermined depth h so as to form a hardened layer 8a. The inside of the core 8 remains unhardened while keeping the hardness of the base material.

The predetermined depth h is set to 5 to 10 µm (preferably 8 µm). The surface hardness of the core 8 is set equal to the outer peripheral surface hardness of the sleeve 3, e.g., HV700 or preferably set to the value of HV400 to 650 which is lower than the outer peripheral surface hardness of the sleeve 3. The hardness of the unhardened portion of the core 8 is HV95 to 185.

The elastic member 9 is formed on the outer peripheral portion of the core 8 by a vulcanizing press, and integrally has a fixation part 12 which is fixed to the outer peripheral portion of the core 8 and a lip 13 which slides in contact with the inner peripheral surface of the gear 1. The lip 13 is formed with a predetermined thickness onto the outer peripheral portion of the fixation part 12 in such a manner as to increase in diameter and to tilt in the direction opposite to the needle roller 4 side. The lip 13 is provided with four lubricating oil paths 15 at equal intervals in the peripheral direction. Each of the lubricating oil paths 15 is in the form of semicircle having a concave facing the core 8 side.

The friction damper 7 having the above-mentioned configuration can be interposed between the inner peripheral surface of the gear 1 and the outer peripheral surface of the sleeve 3 (gear shaft 2) in a gear transmission device such as a manual transmission of an automobile.

In the state where the friction damper 7 is interposed between the inner peripheral surface of the gear 1 and the outer peripheral surface of the sleeve 3, the lip 13 is brought into contact with the inner peripheral surface of the gear 1, so that the lip 13 is slightly bent against the elasticity. The lip 13 slides in contact with the inner peripheral surface of the gear 1, thereby generating predetermined friction. The generation of the friction makes it possible to suppress the rattle noise of a gear due to the irregular vibration of a crankshaft of an engine at the time of running of an automobile or squeaking noise during idling.

Next, a producing method of the friction damper 7 will be described. A cold-reduced carbon steel sheet is subjected to drawing to form the cylindrical part 10 and the disk part 11 integrally, and then stamping is applied to form a hole into which the sleeve 3 penetrates. Then, gas soft nitriding is applied to the entire surface of the core 8 so as to realize the above-mentioned hardness down to the predetermined depth h, thereby preparing the core 8. The elastic member 9 is integrated into the core 8 by performing vulcanizing press. The above-mentioned gas soft nitriding can facilitate the proper control of the surface hardness and the depth h to be hardened of the core 8.

The friction damper 7 thus produced can be inserted into the space between the inner peripheral surface of the gear 1 and the outer peripheral surface of the sleeve 3 by pressing and outwardly fitting the cylindrical part 10 of the core 8 in and onto the sleeve 3.

Since the entire surface of the core 8 is subjected to a gas nitrocarburizing treatment so as to realize the above-mentioned hardness down to the predetermined depth h, it is possible to prevent the state where the cylindrical part 10 of the core 8 is shaved (gnawed) by the sleeve 3, thereby generating metallic powder when the cylindrical part 10 of the core 8 of the friction damper 7 is fitted onto the sleeve 3.

The surface of the core 8 has the predetermined hardness while the inside thereof has the hardness of the base material. Therefore, at the time of pressing into the sleeve 3, the core 8 can be simply fitted onto the sleeve 3 without deforming.

While the engine is in operation, the cage 5 holding the needle rollers 4 may slightly move in the axial direction and repeatedly hit the disk part 11 of the core 8. However, as described above, by a gas nitrocarburizing treatment, the entire surface of the core 8 including the disk part 11 is hardened down to the predetermined depth h, so that even when the cage 5 hits the disk part 11, the core 8 can be prevented from being damaged and used for a long period of time.

Further, the entire surface of the core 8 including the disk part 11 is hardened down to the predetermined depth h. It is therefore possible to secure the holding of the elastic member 9 when it is integrated into the core 8. This can impart stable friction to the gear 1.

### (Second Embodiment)

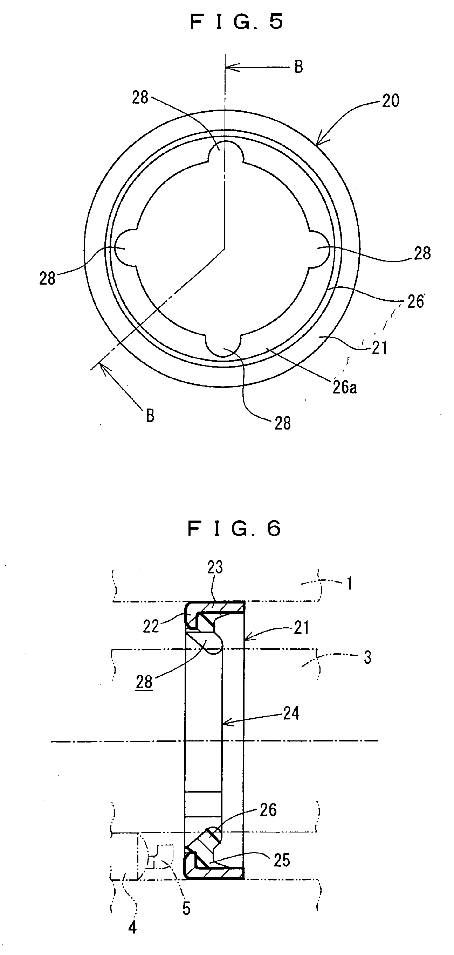

FIG. 5 is a front view of a friction damper showing a second embodiment of the present invention, and FIG. 6 is a sectional view taken along line B-B of FIG. 5. The second embodiment shows an example that the gear 1 is used as a fixed member and the shaft element formed from the gear shaft 2 and the sleeve 3 outwardly fitted onto this is used as a rotating member.

A disk part 22 of a core 21 forming a friction damper 20 in the second embodiment is integrally formed with a cylindrical part 23 in such a manner that the disk part 22 is inwardly bent in the radial direction from the edge portion of the cylindrical member 23 on the cage 5 side. By a gas nitrocarburizing treatment, the surface hardness of the core 20 is set equal to the inner peripheral surface of the gear 1, e. g., HV700 or preferably set to the value of HV400 to 650 which is lower than the inner peripheral surface of the gear 1.

The elastic member 24 is formed on the inner peripheral portion of the core 21 by vulcanizing press, and integrally has a fixation part 25 which is fixed to the inner peripheral portion of the core 21 and a lip 26 which slides in contact with the outer peripheral surface of the sleeve 3.

The lip 26 is formed with a predetermined thickness onto the inner peripheral portion of the fixation part 25 in such a manner as to decrease in diameter and to tilt in the direction opposite to the needle roller 4 side. The lip 26 is provided with four lubricating oil paths 28 at equal intervals in the circumferential direction. Each of the lubricating oil paths 28 is in the form of semicircle having a concave facing the core 21 side. The other components are the same as those in the first embodiment and are denoted by the same reference numerals, so that their description will not be repeated.

The friction damper 20 having the above-mentioned configuration differs from the friction damper 7 of the first embodiment in that the cylindrical part 23 of the core 20 is fitted onto the inner peripheral surface of the gear 1, and that the lip 26 of the elastic member 24 brings into contact with the outer peripheral surface of the sleeve 3.

The second embodiment is the same as the first embodiment in that squeaking noise can be suppressed, that gas soft nitriding can facilitate the proper control of the surface hardness and the depth to be hardened of the core 21, that the generation of metallic powder can be prevented; and that stable friction can be imparted.

The surface of the core 21 has the predetermined hardness while the inside thereof has the hardness of the base material. Therefore, at the time of pressing into the inner peripheral surface of the gear 1, the core 21 can be simply fitted onto the inner peripheral surface of the gear 1.

While the engine is in operation, the cage 5 holding the needle roller 4 may slightly move in the axial direction and repeatedly hit the disk part 22 of the core 21. However, the entire surface of the core 21 is hardened down to the predetermined depth, so that even when the core 21 hits the disk part 22, the core 21 can be prevented from being damaged.

## Claims

1. A friction damper which is used for a gear transmission device including a shaft element, a gear into which the shaft element penetrates, and a rolling element interposed between the shaft element and the gear, the shaft element and the gear being provided so as to be relatively rotatable around a shaft center, the friction damper comprising:
a core attached to the peripheral surface of a fixed member which is either the shaft element or the gear; and
an elastic member integrally provided with the core, the elastic member having a lip sliding in contact with the peripheral surface of a rotating member which is either the shaft element or the gear, and a plurality of lubricating oil paths formed on the rotating member in a circumferential direction, wherein
the core includes a cylindrical part fitted onto the peripheral surface of the fixed member, and a disk part provided on the edge portion of the cylindrical part on the rolling element side so as to extend in a radial direction, and the surface of the core is subjected to a hardening process.

2. The friction damper according to claim 1, wherein
the surface of the core is hardened by a gas nitrocarburizing treatment.

3. The friction damper according to claim 1, wherein
the entire surface of the core is hardened down to a predetermined depth so as to form a hardened layer, the inside of the core remains unhardened while keeping the hardness of the base material, and the surface hardness of the core is set equal to or slightly lower than the outer peripheral surface hardness of the shaft element.

4. The friction damper according to claim 3, wherein
the predetermined depth is 5 to 10 µm.

5. The friction damper according to claim 3, wherein
the surface hardness of the core is HV400 to 650, and the hardness of the unhardened portion inside the core is HV95 to 185.

6. A friction damper which is used for a gear transmission device including a shaft element, a gear into which the shaft element penetrates, and a rolling element interposed between the shaft element and the gear, the shaft element and the gear being provided so as to be relatively rotatable around a shaft center, the friction damper comprising:
a core attached to the peripheral surface of a fixed member which is either the shaft element or the gear; and
an elastic member integrally provided with the core, the elastic member having a lip sliding in contact with the peripheral surface of a rotating member which is either the shaft element or the gear, and a plurality of lubricating oil paths formed on the rotating member in a circumferential direction, wherein
the core includes a cylindrical part fitted onto the peripheral surface of the fixed member, and a disk part provided on the edge portion of the cylindrical part on the rolling element side so as to extend in a radial direction, the entire surface of the core is hardened down to a depth of 5 to 10 µm by applying gas soft nitriding in such a manner that the surface hardness of the core is set to HV400 to 650 which is equal to or slightly lower than the outer peripheral surface of the shaft element, and the inside of the core remains unhardened while keeping HV95 to 185 of the hardness of the base material.

7. A gear transmission device comprising:
a shaft element;
a gear into which the shaft element penetrates;
a rolling element interposed so as to freely roll between the shaft element and the gear; and
a friction damper which is disposed between the shaft element and the gear and is also disposed beside the rolling element in an axial direction to generate friction between the shaft element and the gear, the shaft element and the gear being provided so as to be relatively rotatable around a shaft center, wherein
the friction damper includes a core attached to the peripheral surface of a fixed member which is either the shaft element or the gear, and an elastic member integrally provided with the core, the elastic member having a lip sliding in contact with the peripheral surface of a rotating member which is either the shaft element or the gear, and a plurality of lubricating oil paths formed on the rotating member in a circumferential direction, and
the core includes a cylindrical part fitted onto the peripheral surface of the fixed member, and a disk part provided on the edge portion of the cylindrical part on the rolling element side so as to extend in a radial direction, and the surface of the core is subjected to a hardening process.

8. The gear transmission device according to claim 7, wherein
the surface hardness of the core is set equal to or slightly lower than the surface hardness of the peripheral surface of the rotating member.
